# EUROPEAN PATENT APPLICATION

(11) **EP 2 887 651 A1**
(43) Date of publication of application: **24.06.2015**
(21) Application number: 13306786.8
(22) Date of filing: 19.12.2013
(51) Int. Cl.: H04N 7/15, G06F 3/01

(54) **Method for conducting a remote video communication session**

(71) Applicant: ALCATEL LUCENT, 92100 Boulogne-Billancourt (FR)
(72) Inventor: Van Broeck, Sigurd, 2018 Antwerpen (BE); Stevens, Christoph, 2018 Antwerpen (BE)
(74) Representative: ALU Antw Patent Attorneys

(57) **Abstract**

The present invention relates to a method, system and related devices for conducting a remote video communication session between a plurality of users, each user being associated with a user device, each user device being coupled to Server device. Such a method comprises the steps of visualizing a representation of a plurality of users at a display of a user device of each user of said plurality of users and capturing a gaze direction of a first user of said plurality of users at a respective user device associated with said first user and subsequently translating said gaze direction of said first user of said plurality of users into a gaze representation of said first user (of said plurality of users) and finally effectuating said gaze representation of said first user of said plurality of users in said step of visualizing said representation of said first user at a display of a user device of each further user of said plurality of users.

## Description

### FIELD OF THE INVENTION

The present invention relates to the field of remote video communication sessions, and in particular to improving the interaction between participants in a video conference.

### TECHNICAL BACKGROUND OF THE INVENTION

Eye gaze is a useful element when communicating in group with three or more people. The eye gaze information is useful for the person talking, in order to direct his attention to a specific person and to get feedback from him; for the listeners, in order to understand who the speaker is talking to and whom (or what) the other listeners are looking at; and for turn-taking. As such, people can see each other, they know that other people can see them, and they know that the other people know that they can see them. This reciprocal characteristic is referred to as gaze translucency.

In face-to-face conversations, the eye gaze of an individual is easy to detect. However, in today's multi-party video calls (Computer Mediated Communications), all participants are looking almost directly into their small monitor at the (mosaic of) other people whereby eye gaze direction is almost completely lost. All the advantages of gaze translucency are therefore lost. Moreover, each individual feels as if every other participant is looking directly at him. All participants therefore feel that they get much more attention than they would normally attract or deserve in the given social setting.

Commercial telecommunication systems do not provide gaze translucency. Google Hangouts uses the loudness of the user's voice to switch the speaker from the background to the foreground which already helps to augment the remote communication but full gaze translucency is not provided. This makes a remote session with a group of people very different from a face to face communication. In a mosaic-alike setup with the streaming images of each user, it seems that all remote users are always directly talking to you. Also in commercial telecommunication systems using virtual worlds, gaze translucency is not provided.

Current virtual worlds rotate the body or head of the user's avatar to indicate the direction at which the user is looking. This input is not based on the user's actual gaze but rather on user input using conventional input methods and systems like keyboard and mouse. Even when the user looks away from the screen, his avatar in the virtual world is still looking to whoever he was looking at before he turned his gaze away from the screen. The user can even fool the system by using his input system to look at a first user while he's actually looking at a second user. The gaze information obtained by the remote users is therefore mostly incorrect, often unnatural, and sometimes even misleading. The gaze translucency that we are used to in fact-to-face group conversations is therefore completely overturned making such remote conversations with multiple people extremely difficult, often unnatural, and sometimes annoying.

Other systems are manipulating the eyes of a user's representation - such as an avatar - to make such representation more life-like based on methods like stored procedures or artificial intelligence. Neither of these solutions provides a gaze for the representation of the user that is consistent with the user's view of the virtual world in which his avatar resides. Gaze translucency is therefore not provided in such solutions.

### SUMMARY OF THE INVENTION

An objective of the present invention is to provide with a method, a system and related devices for conducting a remote video communication session between a plurality of users, but wherein the aforementioned shortcoming or drawbacks of the known solutions are alleviated or overcome.

Accordingly, embodiments of the present invention relate to a method for conducting a remote video communication session between a plurality of users, each user being associated with a user device, each user device being coupled (optionally via a Server device), said method comprising the steps of:
- visualizing a representation of a plurality of users at a display of a user device of each user of said plurality of users; and
- capturing a gaze direction of a first user of said plurality of users at a respective user device associated with said first user; and
- translating said gaze direction of said first user of said plurality of users into a gaze representation of said first user of said plurality of users; and
- effectuating said gaze representation of said first user of said plurality of users in said step of visualizing said representation of said first user at a display of a user device of each further user of said plurality of users.

Correspondingly, embodiments of the invention relate to a system configured to conduct a remote video communication session between a plurality of users, each user of said plurality of users being associated with a user device included in said system, each user device being coupled, optionally via a Server device included in said system, said system comprising:
- . a visualization means, configured to visualize a representation of a plurality of users at a display of a user device of each user of said plurality of users; and
- . a gaze capturing means, configured to capture a gaze direction of a first user of said plurality of users at a respective user device of said first user; and
- . a translation means, configured to translate said gaze direction of said first user of said plurality of users into a gaze representation of said first user; and
- . an effectuation means, configured to effectuate said gaze representation of said first user of said plurality of users in said step of visualizing said representation of said first user at a display of a user device of each further user of said plurality of users.

Correspondingly, embodiments of the invention relate to a first user device and to a server device.

In an embodiment the method according to the present invention the gaze representation includes the gaze direction of said first user.

In another embodiment the first user may be seated on an object such as a chair that in addition or alternatively may be rotated in direction of the gaze direction of said first user.

In another embodiment of the method of the present invention the gaze representation may include the rotation of the (upper) body, where the rotation of the (upper) body indicates the gaze direction of said first user.

In another embodiment of the method of the present invention the gaze representation may include the rotation of the head, where the rotation of the head indicates the gaze direction of said first user.

In another embodiment of the method of the present invention the gaze representation may include a normal of the eyes of said first user, where the rotation of the (normal of the) eyes indicates the gaze direction of said first user.

In another embodiment, the rotation of the body, head and eyes may involve movement of other parts of the body like e.g. the legs, the neck and the eye lids of the avatar. The control of those body parts can be based on methods like stored procedures or artificial intelligence.

In another embodiment of the method of the present invention the gaze representation may include other behavior related to gaze like blinking, pupillary responses and Strabismus.

In another embodiment of the method of the present invention the gaze representation may include a combination of mentioned embodiments where the total rotation indicates the gaze direction of said first user and the sum of the individual rotations equals the total rotation. The individual positive or negative rotations can be intelligently distributed using stored procedures or artificial intelligence and may be based on the user's individual preferences.

It is to be noted that the described functional means of the system may be distributed over the first communications device and/or one or more further network elements such as a server device as described in the further appended claims.

In this way, by visualizing a representation of a first user at a display of a user device of each further user of said plurality of users and capturing a gaze direction of said first user of said plurality of users at a respective user device associated with said first user and subsequently translating said gaze direction of said first user of said plurality of users into a gaze representation of said first user, which gaze representation of said first user can be effectuated in said visualizing of said representation of said first user at a display of a user device of each further user of said plurality of users.

Said gaze representation may be the representation of said user wherein the direction this user is looking in, is present.

A further embodiment of the present invention is that said gaze representation includes the gaze direction of said first user.

Hence based on the gaze representation which is based on the translation of the determined gaze direction of said first user, the user representation at a display of a user device of each further user of said plurality of users, includes the gaze direction of the first user so that each of the further users is able to perceive the direction in which the first user is looking.

For instance, if a first user is looking at his screen to the representation of a second user, the second user using a first person view will perceive that the representation of the first user is directly looking at him. A third person will perceive that the representation of the first user is directly looking at the representation of the second user. If the first user then changes his gaze away from the screen, his representation will change his view accordingly and fallback to using a stored procedure or artificial intelligence to drive the direction in which his representation is looking. In such case, eye contact with the representation of another user has to be avoided by alternatively looking at different objects, looking up, down, left or right, looking to a handheld device, coloring or closing his eyes, or any other behavior that represents the absence of gaze from the first user towards his screen.

In another embodiment the method of the present invention the gaze representation may include the rotation of the (upper) body, where the rotation of the (upper) body indicates the gaze direction of said first user.

In another embodiment of the method of the present invention the gaze representation may include the rotation of the head, where the rotation of the head indicates the gaze direction of said first user.

Alternatively, the first user may be seated on an object such as a chair that in addition or alternatively may be rotated in direction of the gaze direction of said first user.

Hence based on the gaze representation which is based on the translation of the determined gaze direction of said first user, the user representation at a display of a user device of each further user of said plurality of users, may include a rotated head and/or rotated body of the first user so that each of the further users is able to perceive the direction in which the first user is looking, i.e. the direction wherein the body and head are headed to.

In an embodiment of the method of the present invention the gaze representation may include a normal of the eyes of said first user.

Hence based on the gaze representation which is based on the translation of the determined gaze direction of said first user, the user representation at a display of a user device of each further user of said plurality of users, includes the normal of the eyes of said first user so that each of the further users is able to perceive the direction in which the first user is looking.

In another embodiment of the method of the present invention the gaze representation may include the movement of other parts of the body like e.g. the legs, the neck and the eye lids of the avatar to support the mentioned methods. The control of those body parts can be based on methods like stored procedures or artificial intelligence.

In another embodiment of the method of the present invention the gaze representation may include other behavior related to gaze like blinking, pupillary responses and Strabismus.

Still another optional embodiment is that a processing means, optionally included in a server device, is configured to detect a mutual gaze for a plurality of users if said gaze capturing means of a first user device captures a gaze direction of a first user being in direction of a second user and if said gaze capturing means of a second user device captures a gaze direction of a second user being in direction of said first user.

Further characterizing embodiments of the present method for conducting a remote video conference are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for conducting a remote video conference according to an embodiment of the present invention; and
Fig. 2 represents the functional structure of a user device UD0 and a server device SD according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

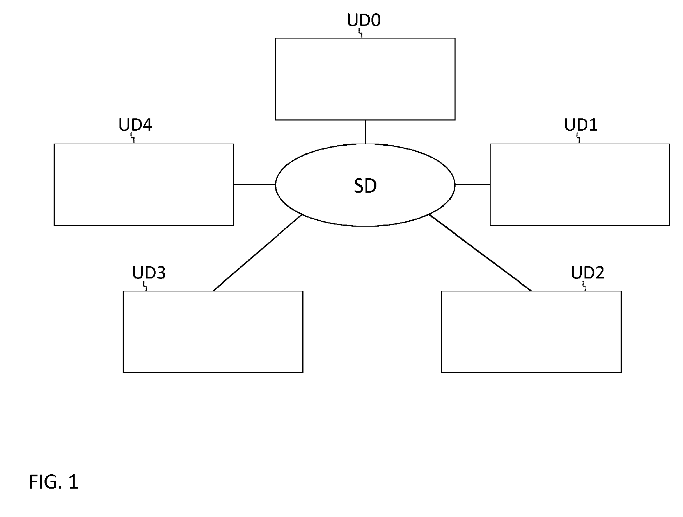

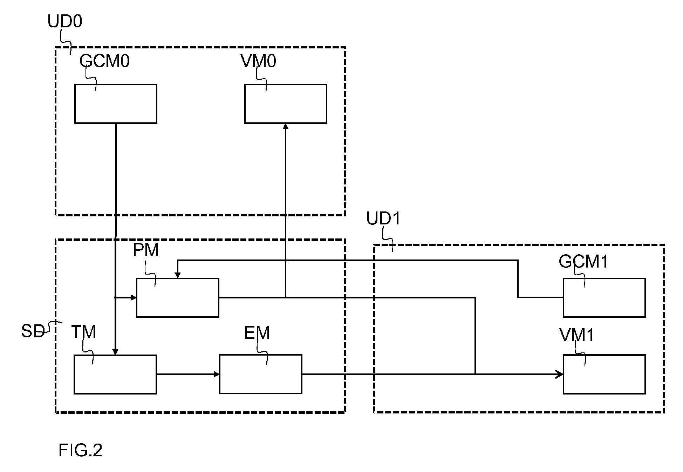

In the following paragraphs, referring to the drawing in FIG.1, an implementation of the system for conducting a remote video communication session according to an embodiment of the present invention is described. In a further paragraph, all connections between mentioned elements are defined. Subsequently all relevant functional means of the mentioned system as presented in FIG.2 are described followed by a description of all interconnections.

In the succeeding paragraph the actual execution of the system is described.

A first essential element of the system is a server device for establishing such remote video communication sessions between a plurality of users where each user being associated with a user device. Further the system comprises a plurality of user devices UD0,.., UD4. Such user device being a device configured to conduct a video conference, such user device comprising a display (that may consist of multiple monitors) adapted to visualize representations of a plurality of users, i.e. conference participants; a camera or a set of cameras to record a representation of the user that is associated with the user device and eye gaze tracking means, configured to repeatedly or continuously detect a gazing direction of a user of the user device.

Each user device UD0,...UD4 is coupled to Server Device SD over a communications network able to support remote video communication sessions where such communications network may include an xDSL, xPON, WMAN, LAN, 3G link or other fixed or mobile connection such as Wi-Fi, Bluetooth, GSM, UMTS 4G etc or any combination of the previous communication networks.

A first essential means of a user device UD0 of an embodiment of the present invention is a visualization means VMO, that is configured to visualize a representation of a plurality of users at a display of the first user device UD0 being the screen of the user device and means to steer the screen of the user terminal.

Further, the user device UD0 includes a gaze capturing means GCMO that is configured to capture a gaze direction of a first user of said plurality of users at a respective first user device UD0 of the first user. An embodiment of such gaze capturing means GCMO may be included in Diff Displays see http://sachi.cs.st-andrews.ac.uk/research/software/diffdisplays/ wherein the system that is able to track which display you are looking at using a web camera. Another alternative embodiment of such gaze capturing means GCMO may be a Tobii eye tracker wherein the gaze direction can be measured with a precision of 1 degree. This makes it possible to drive the eyes of the user's representation also more precisely. Further alternative embodiments are Miramtrix or other Hardware trackers, webcams in combination with software trackers and Do-It-Yourself eye-tracker (DIY setup), and devices capable of eye and/or head tracking , devices capable of capturing brain signals/waves of which their interpretation leads or could lead to instructions towards head and/or eye movements.

Moreover, such user device optionally may include a translation means TM, that is configured to translate said captured gaze direction of the first user of said plurality of users into a gaze representation of said first user where the gaze representation may be the representation of said user wherein the direction this user is looking is present.

In a further embodiment, the gaze representation may include the gaze direction of said first user.

Hence based on the gaze representation which is based on the translation of the determined gaze direction of said first user, the user representation at a display of a user device of each further user of said plurality of users, includes the gaze direction of the first user so that each of the further users is able to perceive the direction in which the first user is looking.

The Server Device SD may comprise a translation means TM that is configured to translate a gaze direction of a first user of said plurality of users into a gaze representation of said first user in which case the gaze direction of said first user being received from said first user device UD0 and optionally an effectuation means EM that is configured to effectuate said gaze representation of said first user of said plurality of users in said step of visualizing said representation of said first user at a display of a user device of each further user of said plurality of users.

The visualization means VMO of the first user device UD0 has an input that is coupled to an input-device of the first user device UD0. Further the gaze capturing means GCMO is coupled to an output-device of the first user device UD0.

The translation means TM of the Server Device SD further has an input-terminal that is at the same time an input-terminal of the server device SD. The translation means TM further is coupled to the effectuation means EM that further has an output-terminal being coupled to an output-terminal of the server device.

The processing means PM further is coupled with an input of the processing means PM to an input-terminal of the server device SD. The processing means further is coupled with an output to an output-terminal of the server device SD that in turn is coupled, via an input-terminal of the user device UD1, to an input of the gaze capturing means GCM1 of the user device UD1 associated with the second user.

It is to be noted that the further user terminals UD1,...,UD4 have the same structure and couplings as the first user device UD0.

In order to explain the present invention first it is assumed that five remote located users conduct a video conference call. Each of the users is associated with a respective user device UD0,..,UD4.

Hence, it is further assumed that the remote video conference call may be applied in a kind of mosaic wherein the representation of a user is a picture or streaming video presented at the display of each further user device which presentation of the representation of a plurality of users is under control of a visualization means of the respective user device.

Hence, at the display of the first user device UD0, the representation of each further user of the respective user devices UD1,..,UD4 are displayed.

The gaze capturing means GCMO of the first user device, continuously monitors and subsequently captures a gaze direction of a first user being associated with the first user device UD0. The gaze capturing means GCMO detects that the first user is looking at the representation of the second user at his display (where this second user is being associated with the second user device UD1). Subsequently, the translation means TM, translates the detected and captured gaze direction, where the gaze direction of the first user, is in direction of the representation of the second user at the display of the first user device UD, into a gaze representation of said first user which gaze representation of the first user is to be presented at a display of the user devices of each of the further users.

Further, the effectuation means EM effectuate the gaze representation of said first user of said plurality of users in the visualization of the representation of said first user at a display of a user device of each further user of said plurality of users.

This gaze representation of the first user is effectuated in the visualization of the representation of said first user at a display of a user device of each further user of said plurality of users, by means of including the normal of the eyes of said first user in the representation of said first at a display of a user device of each further user of said plurality of users or, in case of using an avatar in a virtual world, by rotating the head and/or body of the first user where said twisted head and body points in said gaze direction of said first user, i.e. in direction of the second user at the display of the first user device UD0.

Alternatively, the first user may be seated on an object such as a chair that in addition or alternatively may be rotated in direction of the gaze direction of said first user.

Further, there may be a situation wherein this second user at user device UD1 on purpose or accidentally is looking at the representation of the first user at the display of his user device, the corresponding gaze capturing means GCM1 detects that the second user is looking at the representation of the first user at his display (where this second user is being associated with the second user device UD1). Subsequently, the translation means TM, translates the detected and captured gaze direction, where the gaze direction of second user, is in direction of the representation of the first user at the display of the second user device UD1, into a gaze representation of said first user which gaze representation of the first user is to be presented at a display of the user devices of the further users. Subsequently a processing means PM of the server device detects this mutual gaze, meaning that two users are at the same time looking at each other's representation presented at the display of the corresponding user device. The processing means PM at detection of this so-called mutual gaze performs a mutual gaze indication at the respective displays of the user-devices associated with the first and second user. Hence Gaze translucency can now be visualized by combining the gaze information from the different users including an optional mutual gaze indicator. Mutual gaze can be different for different users on different user devices. E.g. if a first user is looking at a second user and the second user is looking at the first user, both will experience mutual gaze, and therefore get a mutual gaze indicator, but a third user looking at the first or second user will not experience mutual gaze, and therefore not get a mutual gaze indicator.

In case of a mosaic-alike representation with streaming video, a similar solution can be applied where the streaming images are complemented with an array of light beams representing the gaze direction [and intensity] of the users virtually positioned in an imaginary circular arrangement in a complementary scene.

Alternatively to using the eye normal for identifiable objects or additional information in the form of vectors, an array of points, or a array of eye representation objects, the eye's of the user's representation can be replaced by a set of [invisible] light beams where the light beams are correlated to the user's gaze representation, are located in the centre of the presumed eye location of the user's gaze representation and are directed into the direction of the user's eyes onto the virtual world.

This method has the additional benefit that the user may opt to visualize the light from the eye beams of all remote users or alternatively only (1) for users that he is looking at and (2) for the users looking at his representation.

This method does not exclude visualization methods like "moving the avatar a bit to the foreground" where the calculation of the "zooming in" could be based on the relative distance between the avatars and the position of the camera. Complementary visualization alternatives to the latter could be that depth and or its perception is changed accordingly. This method does also not exclude visualization methods like "using an overlay at the client side".

It is further to be noted that such remote video conference call may be applied in a virtual world wherein each of the users may be represented as an avatar or a point cloud or a hologram.

Alternatively, such remote video conference call may be applied in a kind of mosaic wherein the representation of the user is a picture or streaming video.

Alternatives hereto may be a robot where in the conference some of the users or everyone is represented by robot or other tangible user representation.

Further, it is to be noted that although the embodiment describes a client-server architecture wherein the present invention is implemented and executed, this also could have been implemented and executed in a peer-to-peer architecture, cloud architecture, hardware architecture, and each other form in between.

The various means of the system can be located in a central way or in a more distributed manner, where these means may be distributed over the client devices and an optional server device.

Further it is to be noted that all actual face and head movements of the user - like nodding, blinking, or raising eyebrows and pupil size changes- can be superimposed on the user representation described in this invention '(or vice versa)

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for conducting a remote video communication session between a plurality of users, each user being associated with a user device , each user device being coupled, said method comprising the steps of:
- visualizing a representation of a plurality of users at a display of a user device of each user of said plurality of users; and
- capturing a gaze direction of a first user of said plurality of users at a respective user device associated with said first user; and
- translating said gaze direction of said first user of said plurality of users into a gaze representation of said first user of said plurality of users; and
- effectuating said gaze representation of said first user of said plurality of users in said step of visualizing said representation of said first user at a display of a user device of each further user of said plurality of users.

2. A method according to claim 1, wherein said gaze representation includes gaze direction of said first user.

3. A method according to claim 1, wherein said gaze representation includes a rotated head and/or body said rotated head and/or body pointing in said gaze direction of said first user.

4. A method according to claim 1, wherein said gaze representation includes a normal of the eyes of said first user.

5. System configured to conduct a remote video communication session between a plurality of users, each user of said plurality of users being associated with a user device (UDO,..UD4), each user device being coupled, said system comprising:
- . a visualization means, configured to visualize a representation of a plurality of users at a display of a user device of each user of said plurality of users; and
- . a gaze capturing means (GCM), configured to capture a gaze direction of a first user of said plurality of users at a respective user device of said first user; and
- . a translation means (TM), configured to translate said gaze direction of said first user of said plurality of users into a gaze representation of said first user; and
- . an effectuation means (EM), configured to effectuate said gaze representation of said first user of said plurality of users in said step of visualizing said representation of said first user at a display of a user device of each further user of said plurality of users.

6. First User device (UDO) for use in a system configured to conduct a remote video communication session between a plurality of users, each user of said plurality of users of said system being associated with a user device (UD0,..UD4) included in said system, each user device (UD0,..UD4) being coupled, said first user device (UDO) comprising:
- . a visualization means (VMO), configured to visualize a representation of a plurality of users at a display of said first user device (UDO); and
- . a gaze capturing means (GCM), configured to capture a gaze direction of a first user of said plurality of users at a respective first user device (UDO) of said first user.

7. First User device (UDO) according to claim 6, wherein said first User device (UDO) further comprises:
- . a translation means (TM), configured to translate said gaze direction of said first user of said plurality of users into a gaze representation of said first user.

8. First User device (UDO) according to claim 6 or 7, wherein said first User device (UDO) further comprises:
- . an effectuation means, configured to effectuate said gaze representation of said first user of said plurality of users in said step of visualizing said representation of said first user at a display of a user device of each further user of said plurality of users.

9. Server Device (SD) for use in a system configured to conduct a remote video communication session between a plurality of users, each user of said plurality of users of said system being associated with a user device (UD0,..UD4) included in said system, each user device being coupled to said Server device (SD) included in said system, said server device (SD) comprising:
- a translation means (TM), configured to translate a gaze direction of a first user of said plurality of users into a gaze representation of said first use, said gaze direction of said first user being received from said first user device (UD0).

10. Server Device (SD) according to claim 9 wherein said server device (SD) further comprises:
- . an effectuation means (EM), configured to effectuate said gaze representation of said first user of said plurality of users in said step of visualizing said representation of said first user at a display of a user device of each further user of said plurality of users.

11. Server Device (SD) according to claim 9 or 10, wherein said server device (SD) further comprises:
- . a processing means (PM) configured to detect a mutual gaze of a plurality of users if said gaze capturing means (GCM) of a first user device captures a gaze direction of a first user being in direction of a second user if said gaze capturing means (GCM) of a second user device captures a gaze direction of a second user being in direction of said first user.
